Europäisches Patentamt

European Patent Office

Office européen des brevets

(19)

(11) Veröffentlichungsnummer: **0 220 583 B1**

# EUROPÄISCHE PATENTSCHRIFT

(45) Veröffentlichungstag der Patentschrift: **17.07.91**

(21) Anmeldenummer: **86114123.2**

(22) Anmeldetag: **13.10.86**

(51) Int. Cl.5: **C22B 34/12**, C01B 17/00, C01B 17/90, C01G 23/00

(54) **Verfahren zur Rückführung von Schwefelsaure aus Dünnsäure.**

(30) Priorität: **25.10.85 DE 3537941**

(43) Veröffentlichungstag der Anmeldung:
**06.05.87 Patentblatt 87/19**

(45) Bekanntmachung des Hinweises auf die
Patenterteilung:
**17.07.91 Patentblatt 91/29**

(84) Benannte Vertragsstaaten:
**BE DE FR GB IT NL**

(56) Entgegenhaltungen:
**DE-A- 2 729 755**
**DE-A- 3 230 755**
**US-A- 2 278 709**

(73) Patentinhaber: **BAYER AG**

**W-5090 Leverkusen 1 Bayerwerk(DE)**

(72) Erfinder: **Lailach, Günter, Dr.**
**Bodelschwinghstrasse 23**
**W-4150 Krefeld(DE)**
Erfinder: **Gerken, Rudolf, Dr.**
**Ratherstrasse 79**
**W-4150 Krefeld(DE)**

## Beschreibung

Die vorliegende Erfindung betrifft ein Verfahren zur Rückführung von Schwefelsäure aus Dünnsäure, die bei der Titandioxidherstellung nach dem Sulfatverfahren anfällt, zum Titanrohstoffaufschluß durch Eindampfung der Dünnsäure auf eine solche Konzentration, daß nach dem Abkühlen auf eine Temperatur unter 70° C eine 60 bis 70 %ige Schwefelsäure von den festen Metallsulfaten abgetrennt wird, diese 60 bis 70 %ige Schwefelsäure, die noch gelöste Metallsulfate enthält, auf eine Konzentration von 70 bis 85 Gew.-% H$_2$SO$_4$ konzentriert wird.

Die Entsorgung der Titandioxidherstellung nach dem Sulfatverfahren ist eine ökologische Notwendigkeit. Aus ökonomischen und ökologischen Gründen wird dabei versucht, die in der metallsulfathaltigen Dünnsäure enthaltene freie Schwefelsäure nach dem Eindampfen möglichst vollständig zum Titanrohstoffaufschluß zurückzuführen. Bei der Verarbeitung eisenreicher Ilmenite als Titanrohstoff reichen für die zurückgewonnene Schwefelsäure Konzentrationen im Bereich 65 bis 70 % H$_2$SO$_4$ aus, um die gesamte bei der Abtrennung der Metallsulfate anfallende Säure im Gemisch mit über 95 %iger Schwefelsäure oder Oleum beim Rohstoffaufschluß einsetzen zu können (DE-A 2 729 755). Bei der Verarbeitung titanreicher Rohstoffe, insbesondere Titanschlacken, wurde früher nach der Abtrennung der Metallsulfate die ca. 65 %ige Schwefelsäure nach dem Pauling-Plinke-Verfahren auf ca. 95 % H$_2$SO$_4$ eingedampft und dann, nach Abtrennung der festen Metallsulfate und -hydrogensulfate, wie frische 96 %ige Schwefelsäure heim Aufschluß verwendet (Ullmanns Encyclopädie der techn. Chem., 4. Aufl., Bd. 18, S. 579-580, Verlag Chemie, Weinheim, US-A 3 210 156). Um diese äußerst unwirtschaftliche Eindampfung zu vermeiden, wird in EP-A 0 133 505 und EP-A 0 097 259 die Eindampfung der ca. 65 %igen Schwefelsäure auf 70 bis 85 % H$_2$SO$_4$ vorgeschlagen, um die vollständige Rückführung der zurückgewonnenen Säure zum Rohstoffaufschluß im Gemisch mit Oleum zu ermöglichen.

Die von den Metallsulfaten, insbesondere FeSO$_4$ x H$_2$O, abgetrennte ca. 65 %ige Schwefelsäure enthält noch 1 bis 7 Gew.-% gelöste Metallsulfate, wobei sich der Gehalt der verschiedenen Sulfate nach der Zusammensetzung der Dünnsäure, der Konzentration der Schwefelsäure und den Bedingungen der Sulfatkristallisation richtet. Diese Sulfate kristallisieren jedoch nach dem Eindampfen der ca. 65 %igen sulfathaltigen Schwefelsäure auf eine H$_2$SO$_4$-Konzentration von 70 bis 85 % teilweise aus und verursachen somit erhebliche Probleme bei der Handhabung der zurückgewonnenen Säure. Beim langsamen Abkühlen erstarrt das Schwefelsäure-Sulfat-Gemisch zu einer steifen Paste. Beim Abkühlen unter Bewegung bewirken die Salze durch ihre Abscheidung auf Kühlflächen das Verstopfen der Wärmetauscher und Rohrleitungen.

Eine Aufgabe der vorliegenden Erfindung ist es deshalb, ein Verfahren bereitzustellen, das die Eindampfung der metallsulfatgesättigten ca. 65%igen zurückgewonnenen Schwefelsäure auf 70 bis 85 % H$_2$SO$_4$ und deren störungsfreie Rückführung zum Titanrohstoffaufschluß ermöglicht.

Diese Aufgabe wird gelöst durch das erfindungsgemäße Verfahren zur Rückführung von Schwefelsäure aus Dünnsäure, die bei der Titandioxidherstellung nach dem Sulfatverfahren anfällt, zum Titanrohstoffaufschluß durch Eindampfung der Dünnsäure auf eine solche Konzentration, daß nach dem Abkühlen auf eine Temperatur unter 70° C eine 60- bis 70%ige Schwefelsäure von den festen Metallsufaten abgetrennt wird, wobei diese 60 bis 70%ige Schwefelsäure, die noch gelöste Metallsulfate enthält, auf eine Konzentration von 70 bis 85 Gew.-% H$_2$SO$_4$ konzentriert wird, wobei die konzentrierte sulfathaltige 70 bis 85-gew.-%ige Säure in einer ersten Kühlstufe auf eine Temperatur abgekühlt wird, die über der Sättigungstemperatur der gelösten Salze in dieser konzentrierten Säure liegt, diese konzentrierte, gelöste Salze enthaltende Säure unter Rühren in eine Suspension eingeleitet wird, die durch weiteres Abkühlen dieser konzentrierten, gelöste Salze enthaltenden Säure erzeugt worden ist und deren Temperatur unter 60° C, vorzugsweise zwischen 30 und 50° C, liegt und aus der die mit der konzentrierten Säure eingebrachte Wärme durch Kühlung mit Kühlwasser abgeführt wird und die dabei gebildete Suspension von festen Metallsulfaten und Metallhydrogensulfaten ohne Abtrennung der Feststoffe direkt beim Titanrohstoffaufschluß eingesetzt wird.

Dabei erfolgt die Konzentrierung auf an sich bekannte Weise in Vakuumzwangsumlaufverdampfern (Fig. 1), Horizontalverdampfern (Fig. 2), Fallfilmverdampfern oder mittels Abgaswärme entsprechend EP-A 0 097 259 (Fig. 3).

Eine bevorzugte Ausführungsform des erfindungsgemäßen Verfahrens besteht darin, daß die Konzentrierung im Kontakt mit heißen Abgasen erfolgt und die aus dem Säureeindampfer austretenden, 150 bis 180° C heißen Abgase zur Vorwärmung der 60 bis 70 %igen Säure auf 100 bis 140° C genutzt werden.

Dabei wird entsprechend dem allgemeinen Stand der Technik die aus dem Verdampfer ausgespeiste konzentrierte Säure so weit wie möglich durch die eingespeiste verdünnte Säure (ca. 65 % H$_2$SO$_4$) gekühlt, um die fühlbare Wärme der konzentrierten Säure zum Aufheizen der verdünnten Säure zu nutzen und den Energiebedarf des Gesamtprozesses zu minimieren. Erfindungsgemäß wird aber in dem Wärmetauscher (5), vorzugsweise einem Röhrenwärmetauscher, nur so viel Energie an die eingespeiste verdünnte Säure (9) abgeführt, daß die Temperatur der aus dem Wärmetauscher (5) austretenden konzentrierten Säure (20) über der Sättigungstemperatur liegt, bei der die gelösten Metallsulfate kristallisieren. Das erfindungsgemäße Verfahren wird somit bevorzugt so ausgeführt, daß die konzentrierte 70 bis 85 %ige Säure in einer ersten Kühlstufe auf eine Temperatur abgekühlt wird, die über der Sättigungstemperatur der gelösten Salze in der konzentrierten Säure liegt.

Es kann von besonderem Vorteil sein, daß als Kühlmedium in der ersten Kühlstufe die 60 bis 70 %ige Säure dient, die dabei vor der Einspeisung in den Verdampfer vorgewärmt wird. Die Kühlung mit einem anderen Kühlmedium auf eine Temperatur, die oberhalb der Sättigungstemperatur der Metallsulfate liegt, entspricht aber auch dem erfindungsgemäßen Verfahren.

Nimmt man die Kühlung der aus dem Verdampfer ausgespeisten Säure durch Wasserverdampfung im Vakuum vor, so ist damit der Vorteil einer weiteren Aufkonzentrierung der Säure verbunden. Auf diese Weise können zu hohe Temperaturen bei der sonst üblichen Eindampfung vermieden werden.

Die Kühltemperatur liegt in Abhängigkeit von der Säurekontentration und dem Sulfatgehalt zwischen 70 und 110°C, meistens zwischen 80 und 100°C, und ist durch Laborversuche leicht zu ermitteln. Erfindungsgemäß wird die konzentrierte Säure in einer weiteren Kühlstufe so weit und unter solchen Bedingungen mittels Kühlwasser gekühlt, daß eine problemlose Handhabung und Rückführung zum Titanrohstoffaufschluß gewährleistet ist.

Erfolgt die Säurekonzentrierung mit Abwärme entsprechend EP-A 0 097 259, so kann die erste Kühlstufe im Wärmetauscher (5) entfallen, wenn genügend Abwärme verfügbar ist. Bei der Konzentrierung mit Heizdampf ist diese Verfahrensweise selbstverständlich auch möglich, aber unwirtschaftlich.

Es wurde gefunden, daß die in diesem Temperaturbereich vorliegende Suspension von Metallsulfaten und -hydrogensulfaten in 70 bis 85 %iger Schwefelsäure problemlos gefördert und dosiert werden kann, wenn die Abkühlung auf diese Temperatur unter 60°C entsprechend dem erfindungsgemäßen Verfahren erfolgt.

Die konzentrierte salzhaltige Säure wird mit einer Temperatur von 70 bis 180°C, vorzugsweise 80 bis 100°C, in einen Rührbehälter eingeleitet, in dem sie unter intensivem Rühren mit einer Suspension, bestehend aus bereits gekühlter Säure, gemischt wird, deren Temperatur unter 60°C, vorzugsweise zwischen 30 und 55°C liegt.

Besonders vorteilhaft ist das erfindungsgemäße Verfahren durchführbar, wenn die mittlere Verweilzeit der Suspension durch die Differenz $\Delta T$ zwischen der Temperatur der in den Rührbehälter eingespeisten Säure und der Temperatur der im Rührbehälter enthaltenen Suspension so bestimmt wird, daß die mittlere Verweilzeit t (min) gleich dem 2- bis 10-fachen, vorzugsweise 3- bis 4-fachen Zahlenwert von $\Delta T$ (K) ist.

Die an das Kühlwasser abzuführende Wärme kann in einem Wärmetauschen (8), vorzugsweise einem Röhrenwärmetauscher, abgeführt werden, durch den die Suspension umgepumpt wird.

Eine weitere Ausgestaltung des erfindungsgemäßen Verfahrens besteht darin, daß die Suspension mittels einer Pumpe durch einen externen wassergekühlten Wärmetauscher im Kreislauf gefördert wird.

Dabei werden erfindungsgemäß die Größe des Wärmetauschers und die Kreislaufmenge so abgestimmt, daß die Temperaturdifferenz zwischen Säureeintritt und -austritt am Wärmetauscher maximal 3 K, vorzugsweise 1 bis 2 K beträgt. Alternativ kann die Wärme über eine wassergekühlte Wand des Rührbehälters und/oder in die Suspension eintauchende Kühlelemente an das Kühlwasser abgeführt werden. In diesem Fall ist intensives Rühren erforderlich, um eine Abscheidung der kristallisierenden Salze auf den Kühlflächen zu vermeiden.

Die auf die angegebene Art gekühlte konzentrierte Säure enthält die kristallisierten Metallsulfate und -hydrogensulfate in äußerst feinteiliger Form suspendiert. Sie läßt sich mit beliebigen Pumpen gut fördern und gut dosieren. Erfindungsgemäß wird diese Suspension direkt beim Titanrohstoffaufschluß eingesetzt ohne vorherige Abtrennung der festen Salze. Es wurde überraschend gefunden, daß dadurch keine Nachteile beim Aufschluß und bei der $TiO_2$-Pigmentherstellung entstehen.

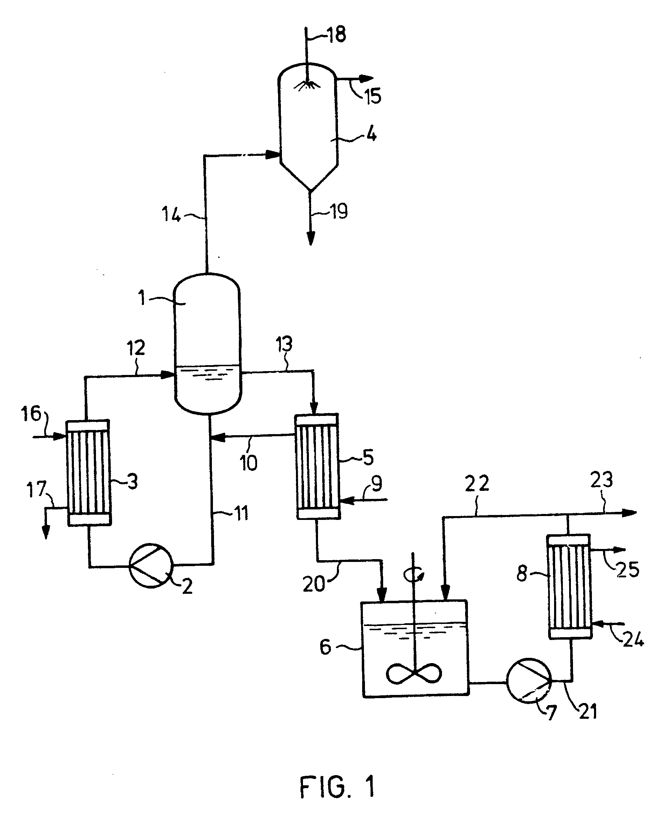

Verschiedene Möglichkeiten zur Durchführung des erfindungsgemäßen Verfahrens sollen anhand der Fig. 1 bis 3 erläutert werden, ohne daß dadurch der Umfang der Erfindung eingeschränkt wird.

Fig. 1 zeigt die Konzentrierung der Säure in einem Zwangsumlaufverdampfersystem und die 2-stufige Kühlung der konzentrierten Säure. Im Verdampfer (1) erfolgt die Wasserverdampfung aus der Säure bei 120 bis 180°C und 40 bis 200 mbar. Die Brüden (14) werden im Einspritzkondensator (4) mittels Kühlwasser (18) kondensiert. Das Abwasser (19) enthält geringe Mengen Schwefelsäure. Die nichtkondensierbaren Gase (15) werden mittels Vakuumpumpe abgezogen. Die Schwefelsäure (11) wird mittels Pumpe (2) durch den Wärmetauscher (3) und den Verdampfer (1) im Kreislauf gefördert. Im Wärmetauscher (3) wird die erforderliche Verdampfungswärme mittels Heizdampf (16) zugeführt; das Dampfkondensat (17) kann wiederverwendet werden. Die 60-bis 70-%ige salzhaltige Schwefelsäure (9) wird im Wärmetauscher (5) auf 60 bis 130°C vorgewärmt, bevor sie in den Säurekreislauf (11) des Verdampfersystems eingespeist wird (10). Der Wärmetauscher (5) ist vorzugsweise so dimensioniert, daß die aus dem Verdampfer (1) ausgespeiste 70 bis 85 %ige salzhaltige Säure durch die eingespeiste Säure nur so weit gekühlt wird, daß ihre Temperatur noch über der Sättigungstemperatur der Metallsulfate und -hydrogensulfate in der Säure (20) liegt. Alternativ kann die gewünschte Temperatur der Säure (20) dadurch eingehalten werden, daß ein Teilstrom der Säure (9) am Wärmetauscher (5) vorbeigeleitet wird. Die in der ersten Kühlstufe unter Ausnutzung der Wärme für den Prozeß auf 70 bis 130°C vorgekühlte Säure (20) wird in die im Rührbehälter (6) in ständiger Bewegung gehaltene, max. 60°C, vorzugsweise 30 bis 55°C, warme Suspension (21) eingeleitet, die mittels Pumpe (7) durch den Wärmetauscher (8) im Kreislauf gefördert wird. Der Wärmetauscher (8) wird mit Kühlwasser (24, 25) beaufschlagt. Pumpe (7) und Wärmetauscher (8) sind so dimensioniert, daß die Temperaturdifferenz zwischen Suspensionseintritt (21) und -austritt (22) maximal 3 K, vorzugsweise 1 bis 2 K, beträgt. Die der konzentrierten Säuremenge (13) entsprechende Menge gekühlter Suspension (23) wird zum Titanrohstoffaufschluß gefördert.

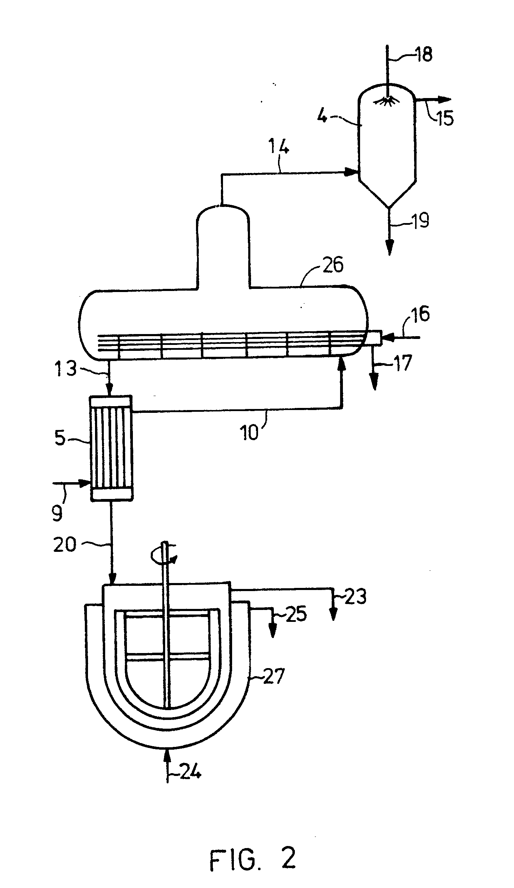

Fig. 2 zeigt die Konzentrierung in einem Horizontalverdampfer. Die 60 bis 70 %ige Säure (9) wird im Wärmetauscher (5) auf 80 bis 130°C vorgewärmt (10) und in den Horizontalverdampfer (26) eingespeist. Das Tantal-Rohrbündel des Verdampfers wird mit Dampf (16) beheizt. Die salzhaltige Schwefelsäure wird in mehreren Stufen auf 150 bis 180°C aufgeheizt, wobei das Wasser entsprechend dem Partialdruck verdampft. Der Verdampfer wird bei 40 bis 200 mbar Druck betrieben; die Brüden (14) werden vorteilhaft analog Fig. 1 durch direkte Kühlung kondensiert, können aber auch durch indirekte Kühlung in Wärmetauschern kondensiert werden. Die aus dem Verdampfer ausfließende konzentrierte Säure (13) wird analog Fig. 1 im Wärmetauscher (5) nur so weit gekühlt, daß mit Sicherheit keine Salze kristallisieren. Die weitere Kühlung der Säure (20) auf unter 60°C erfolgt in einem Rührbehälter (27) mit wassergekühlten (24, 25) Wänden. Ein wandgängiger Gitterrührer oder Ankerrührer verhindert die Salzabscheidung auf den Kühlflächen. Die kalte Suspension (23) wird zum Titanrohstoffaufschluß gefördert.

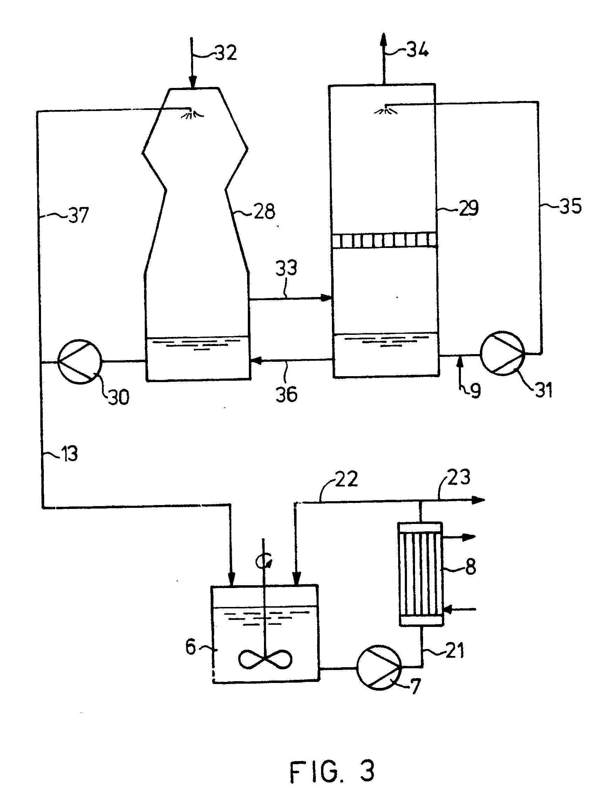

Fig. 3 zeigt die Säurekonzentrierung mit Abwärme gemäß EP 0 097 259. Die konzentrierte 70 bis 78 %ige Säure (37) wird mittels Pumpe (30) im Kreislauf in einen Venturi-Wäscher (28) eingedüst, in dem sie mit ca. 400°C heißen Abgasen aus der TiO₂-Kalzinierung kontaktiert wird. Dabei werden die Gase auf 160 bis 180°C gekühlt und aus der Schwefelsäure die geforderte Wassermenge verdampft. Die 160 bis 180°C heißen Gase (33) werden in einem Sprühturm (29) mit 110 bis 140°C heißer, 60 bis 70 %iger Säure (35) in Kontakt gebracht, die mittels Pumpe (31) im Kreislauf gefördert wird. Die bei der Abkühlung der Gase von 160 bis 180°C auf 110 bis 140°C (34) abgegebene Wärme dient der Aufheizung der 60 bis 70 %igen Säure (9) auf 110 bis 140°C, mit welcher Temperatur sie in den Kreislauf des Venturis (28) eintritt (36). Die entsprechende Menge konzentrierter Säure (13) wird mit 160 bis 180°C in die im Rührbehälter (6) enthaltene, ca. 30 bis 60°C warme Suspension eingeleitet. Die Kühlung erfolgt wie bei Fig. 1 beschrieben, wobei die Auslegung der Apparate entsprechend den oben gemachten Angaben erfolgt.

Beispiel 1 (Vergleichsbeispiel)

In einem Vakuumzwangsumlaufverdampfer wurden bei 120°C und 65 mbar 2.400 l/h 65 %ige Schwefelsäure mit 4 Gew.-% gelösten Metallsulfaten so weit konzentriert, daß eine Säure mit 73 Gew.-% $H_2SO_4$ und 4,5 Gew.-% gelösten Metallsulfaten ausgespeist wurde. (Laborversuche zeigten, daß bei Abkühlung dieser Säure auf ca. 75°C Metallsulfate und/oder -hydrogensulfate kristallisierten. Die Lösung neigte zur Übersättigung. Beim Abkühlen ohne Rühren erstarrte die Säure zu einem nichtpumpfähigen Kristallbrei). Die konzentrierte, 120°C heiße Säure wurde in einen Kühlkreislauf unmittelbar vor der Kreislaufpumpe eingespeist. Der Kühlkreislauf bestand aus einer Pumpe (150 m³/h Förderleistung), einem nachgeschalteten Röhrenwärmetauscher, der mit Kühlwasser beaufschlagt wurde und einer Vorlage mit einem Fassungsvermögen von 1,2 m³. Anfangs betrug die Temperaturdifferenz zwischen Säureeintritt und -austritt des Wärmetauschers knapp 2 K. Die Temperatur der gekühlten Salz-Schwefelsäure-Suspension betrug 53 bis 55°C. Die Förderung durch Rohrleitungen verursachte keine Probleme. Während 48 Betriebsstunden stieg die Temperatur der Suspension erst langsam, dann schneller auf 75°C und blieb dann erst konstant. Der Druckverlust in den Ausspeiseleitungen stieg durch an den Rohrwänden abgeschiedene Salze so weit an, daß die Anlage nach 3 Tagen außer Betrieb genommen werden mußte.

Beispiel 2

Die Säurekonzentrierung erfolgte analog Beispiel 1. Die konzentrierte Säure (2 m³/h) wurde in einen Rührbehälter ausgespeist, in dem 8 m³ einer 50°C warmen, suspendierte Metallsalze enthaltenden 73 %igen Schwefelsäure intensiv gerührt wurden. Das Volumen der Suspension entsprach der erfindungsgemäßen Forderung bezüglich der mittleren Verweilzeit:

$\Delta T$ = 70 K
$\dot{V}$ = 0,0333 m³/min
$V$ = 8 m³
$t$ = 240 min, entspr. 3,43 min/K

Die Suspension wurde mit einer Förderleistung von 100 m³/h durch einen Röhrenwärmetauscher umgepumpt. Die Temperaturdifferenz zwischen Säureeintritt und -austritt lag mit 1,5 K im erfindungsgemäßen Bereich.

Die Metallsulfatsuspension wies folgende Zusammensetzung auf (ohne Berücksichtigung von Hydratwasser in den festen Salzen oder von Hydrogensulfaten):

| | |
|---|---|
| $H_2SO_4$ | 73,00 % |
| $FeSO_4$ | 0,28 % |
| $Al_2(SO_4)_3$ | 1,70 % |
| $MgSO_4$ | 2,27 % |
| $TiOSO_4$ | 0,07 % |
| $MnSO_4$ | 0,06 % |
| $Cr_2(SO_4)_3$ | 0,11 % |
| $VOSO_4$ | 0,016 % |

Während 4 Wochen kontinuierlichen Betriebes wurden weder im Wärmetauscher noch in den Rohrleitungen Salzablagerungen beobachtet.

Einsatz der Metallsulfatsuspension bei der Titandioxidherstellung:

1 kg gemahlenen Ilmenits (60 % $TiO_2$) wurde mit 1309 g der auf 50 °C gekühlten Metallsulfat/-hydrogensulfatsuspension gemischt. Durch Zusatz von 803 g 27%igen Oleums wurde die Aufschlußreaktion gestartet. Die Mischung erreichte eine Temperatur von 195 °C. Nach 3 Stunden Reifezeit wurde der Aufschlußkuchen abgekühlt, zerkleinert und in so viel Wasser gelöst, daß die Lösung 180 g $TiO_2$/l enthielt. Während des Lösens wurde so viel Eisenpulver zugegeben, daß die Lösung einen $Ti^{3+}$-Gehalt entsprechend 1,5 g $TiO_2$/l hatte.

Aus der geklärten Lösung wurden 1150 g Eisensulfat-Heptahydrates kristallisiert und abfiltriert. Das Filtrat wurde auf einen $TiO_2$-Gehalt von 230 g/l eingestellt und nach dem üblichen Verfahren hydrolysiert. Das Hydrolysat wurde gewaschen, gebleicht, mit Rutilkeimen und Einstellchemikalien versetzt und im Drehrohrofen kalziniert. Das erhaltene Rutil-Pigment wurde gemahlen und nach Standardmethoden untersucht. Dabei wurden folgende Werte gemessen:

| | |
|---|---|
| Helligkeit $R_y$ | 92,7 |
| Gelbstich $R_x - R_y$ | 3,1 |
| Aufhellvermögen | 715 |

Die Meßwerte lagen im Bereich der Meßwerte, die an Rutilklinkern gemessen wurden, die aus dem gleichen Ilmenit durch Aufschluß mit reiner, salzfreier 96 %iger Schwefelsäure hergestellt worden waren.

Beispiel 3

In einem Horizontalverdampfer (entspr. Fig. 2) mit einem Säurekühlsystem entsprechend Fig. 1 wurden 4000 kg/h Schwefelsäure mit 65 Gew.-% $H_2SO_4$ und 4 Gew.-% Metallsulfat bei 90 mbar und 152 °C (Temperatur der ausgespeisten Säure) eingedampft. Die ausgespeiste Säure (3150 kg/h) enthielt 82,3 Gew.-% $H_2SO_4$ und 5 Gew.-% gelöste Sulfate. Sie wurde in einem Röhrenwärmetauscher von 152 auf 97 °C gekühlt, wobei keine Salze kristallisierten. Als Kühlmedium diente die einzuspeisende 65 %ige Säure, die von 52 auf 91 °C aufgeheizt wurde, bevor sie in den Horizontalverdampfer eingespeist wurde. Die in der ersten Kühlstufe vorgekühlte konzentrierte Säure wurde in einen Rührbehälter eingeleitet, in dem 4,5 m³ der beim Kühlen der konzentrierten Säure auf 48 °C gebildeten Suspension kräftig gerührt wurden. Die mittlere Verweilzeit der Säure im Rührbehälter betrug 140 min. Die Abführung der mit der 97 °C heißen vorgekühlten Säure eingebrachten Wärme erfolgte in einem Röhrenwärmetauscher an Kühlwasser. Es wurden 100 m³/h Suspension durch den Wärmetauscher im Kreis gefördert. Die Temperaturdifferenz zwischen Eintritt und Austritt der Säure betrug ca. 1 K.

Die Metallsulfatsuspension wies folgende Zusammensetzung auf (ohne Berücksichtigung von Hydratwasser oder Hydrogensulfaten in den festen Salzen):

| | | |
|---|---|---|
| $H_2SO_4$ | 82,3 | % |
| $FeSO_4$ | 0,31 | % |
| $Al_2(SO_4)_3$ | 1,90 | % |
| $MgSO_4$ | 2,50 | % |
| $TiOSO_4$ | 0,07 | % |
| $MnSO_4$ | 0,06 | % |
| $Cr_2(SO_4)_3$ | 0,12 | % |
| $VOSO_4$ | 0,018 | % |

Für die Konzentrierung im Horizontalverdampfer wurden 1,3 t/h 12bar-Dampfes verbraucht. Ohne Vorheizung der eingespeisten Säure in der Kühlstufe 1 wäre der Dampfverbrauch 10 % höher gewesen.

Die Konzentrierung und die Weiterverarbeitung der Säure wurden ohne Probleme kontinuierlich betrieben.

Beispiel 4 (Vergleichsbeispiel)

65 %ige Säure wurde analog Beispiel 3 in einem Horizontalverdampfer konzentriert. Anstatt des Rührbehälters mit Kreislaufpumpe und Röhrenwärmetauscher war ein zweiter Röhrenwärmetauscher direkt hinter den Röhrenwärmetauscher der Kühlstufe 1 montiert. Die eingespeiste 65 %ige Säure wurde mit einer Temperatur von 44°C angeliefert. Sie durchströmte die beiden hintereinander geschalteten Wärmetaucher im Gegenstrom zur konzentrierten, aus dem Verdampfer ausgespeisten Säure. Die Temperatur der 65 %igen Säure erhöhte sich dabei auf 127°C. Die konzentrierte Säure wurde von 152°C auf 59°C gekühlt. Sie floß als Suspension von Metallsulfaten und -hydrogensulfaten in 82,3 %iger Säure aus. Während des Versuches wurde nach ca. 30 min ein Rückstau der konzentrierten Säure im Zulauf der Wärmetauscher beobachtet. Nach 6 Stunden mußte die Anlage abgestellt werden, weil der bei der tieferen Temperatur betriebene Wärmetauscher durch die erstarrte Suspension völlig blockiert war.

Beispiel 5

Entsprechend der EP-A 0 097 259 wurde 65 %ige Schwefelsäure im Kontakt mit 420°C heißem Kalzinierabgas auf 74 % $H_2SO_4$-Gehalt konzentriert. Die Konzentrierung erfolgte in einer aus Venturi-Wäscher (28) und nachgeschaltetem Waschturm (29) bestehenden Anlage (entspr. Fig. 3). 1,2 m³/h konzentrierter Säure (13), die 3,8 Gew.-% Salze (gerechnet als Metallsulfate) enthielten, wurden mit 163°C in einen Rührkühler ausgespeist, der mit 4,5 m³ der resultierenden Suspension gefüllt war. Die Wände des Rührkühlers wurden mit Kühlwasser gekühlt. Außerdem tauchten wassergekühlte Kühlpatronen in die Suspension ein. Die Suspension wurde mit einem Ankerrührer intensiv gerührt. Die Temperatur der gekühlten Suspension betrug 52°C. Es wurden auch nach längerem Betreiben der Anlage keine Salzablagerungen auf den Kühlflächen beobachtet.

**Patentansprüche**

1. Verfahren zur Rückführung von Schwefelsäure aus Dünnsäure, die bei der Titandioxidherstellung nach dem Sulfatverfahren anfällt, zum Titanrohstoffaufschluß durch Eindampfung der Dünnsäure auf eine solche Konzentration, daß nach dem Abkühlen auf eine Temperatur unter 70°C eine 60 bis 70%ige Schwefelsäure von den festen Metallsulfaten abgetrennt wird, daß diese 60-bis 70%ige Schwefelsäure, die noch gelöste Metallsulfate enthält, auf eine Konzentration von 70 bis 85 Gew.-% $H_2SO_4$ konzentriert wird, dadurch gekennzeichnet, daß die konzentrierte sulfathaltige 70- bis 85%ige Säure in einer ersten Kühlstufe auf eine Temperatur abgekühlt wird, die über der Sättigungstemperatur der gelösten Salze in dieser konzentrierten Säure liegt, daß diese konzentrierte, gelöste Salze enthaltende Säure unter Rühren in eine Suspension eingeleitet wird, die durch weiteres Abkühlen dieser konzentrierten, gelöste Salze enthaltenden Säure erzeugt worden ist und deren Temperatur unter 60°C, vorzugsweise zwischen 30 und 55°C, liegt und aus der die mit der konzentrierten Säure eingebrachte Wärme durch Kühlung mit Kühlwasser abgeführt wird und die dabei gebildete Suspension von festen Metallsulfaten und Metallhydrogensulfaten ohne Abtrennung der Feststoffe direkt beim Titanrohstoffaufschluß eingesetzt wird.

2. Verfahren gemäß Anspruch 1, dadurch gekennzeichnet, daß die mittlere Verweilzeit der Suspension durch die Differenz $\Delta T$ zwischen der Temperatur der in den Rührbehälter eingespeisten Säure und der Temperatur der im Rührbehälter enthaltenen Suspension so bestimmt wird, daß die mittlere Verweilzeit t (min) gleich dem 2-bis 10-fachen, vorzugsweise 3- bis 4-fachen Zahlenwert von $\Delta T$ (K) ist.

3. Verfahren gemäß einem der Ansprüche 1 oder 2, dadurch gekennzeichnet, daß die Suspension mittels einer Pumpe durch einen externen wassergekühlten Wärmetauscher im Kreislauf gefördert wird.

4. Verfahren gemäß einem oder mehrerer der Ansprüche 1 bis 3, dadurch gekennzeichnet, daß die Temperaturdifferenz zwischen Eintritt und Austritt der durch den Wärmetauscher im Kreislauf geförderten Suspension maximal 3 K, vorzugsweise 1 - 2 K beträgt.

5. Verfahren gemäß einem der Ansprüche 1 bis 4, dadurch gekennzeichnet, daß als Kühlmedium in der ersten Kühlstufe die 60 bis 70 %ige Säure dient, die dabei vor der Einspeisung in den Verdampfer vorgewärmt wird.

6. Verfahren gemäß einem der Ansprüche 1 bis 4, dadurch gekennzeichnet, daß die Kühlung durch Wasserverdampfung im Vakuum erfolgt.

7. Verfahren gemäß einem der Ansprüche 1 bis 6, dadurch gekennzeichnet, daß die Konzentrierung im Kontakt mit heißen Abgasen erfolgt und die aus dem Säureeindampfer austretenden, 150 bis 180 °C heißen Abgase zur Vorwärmung der 60 bis 70 %igen Säure auf 100 bis 140 °C genutzt werden.

## Claims

1. Method of recycling sulphuric acid from diluted acid, which arises in the production of titanium dioxide by the sulphate process, to the titanium raw material digestion by evaporation of the diluted acid to such a concentration that, after cooling to a temperature below 70 °C, a 60 to 70% strength sulphuric acid is separated from the solid metal sulphates and that this 60-70% strength sulphuric acid, which still contains dissolved metal sulphates, is concentrated to a concentration of 70 to 85% by weight of H₂SO₄, characterised in that the concentrated sulphate-containing 70 to 85% strength acid is cooled in a first cooling stage to a temperature which is above the saturation temperature of the dissolved salts in this concentrated acid, that this concentrated acid containing dissolved salts is introduced with stirring into a suspension which has been produced by further cooling of this concentrated acid containing dissolved salts and whose temperature is below 60 °C, preferably between 30 and 55 °C, and from which the heat introduced with the concentrated acid is removed by cooling with cooling water, and the resulting suspension of solid metal sulphates and metal hydrogen sulphates is used directly, without the solids being separated off, in the titanium raw material digestion.

2. Method according to Claim 1, characterised in that the mean residence time of the suspension is determined by the difference ΔT between the temperature of the acid fed into the stirred vessel and the temperature of the suspension contained in the stirred vessel, in such a way that the mean residence time t (minutes) is equal to twice to 10 times, preferably 3 to 4 times, the numerical value of ΔT (K).

3. Method according to one of Claims 1 or 2, characterised in that the suspension is circulated by means of a pump through an external water-cooled heat exchanger.

4. Method according to one or more of Claims 1 to 3, characterised in that the temperature difference between the inlet and outlet of the suspension circulated through the heat exchanger is at most 3 K, preferably 1 - 2 K.

5. Method according to one of Claims 1 to 4, characterised in that the cooling medium used in the first cooling stage is the 60 to 70% strength acid which is thus preheated before being fed into the evaporator.

6. Method according to one of Claims 1 to 4, characterised in that the cooling is effected by evaporation of water in vacuo.

7. Method according to one of Claims 1 to 6, characterised in that the concentrating takes place in contact with hot waste gases, and the hot waste gases leaving the acid evaporator at 150 to 180 °C are utilised for preheating the 60 to 70% strength acid to 100 to 140 °C.

## Revendications

1. Procédé de récupération d'acide sulfurique à partir d'acide dilué apparaissant après l'opération de sulfatation lors de la fabrication de dioxyde de titane, en vue de la lixiviation de la matière première de titane, par concentration par évaporation de l'acide dilué jusqu'à une concentration telle qu'après le refroidissement à une température inférieure à 70 °C un acide sulfurique à une concentration de 60 à 70 % est séparé des sulfates métalliques solides, cet acide sulfurique à une concentration de 60 à 70 %, qui contient encore des sulfates métalliques en solution, est porté à une concentration de 70 à 85 % en poids de H₂SO₄, caractérisé en ce que l'acide à une concentration de 70 à 85 % et contenant des sulfates est, dans une première étape de refroidissement, refroidi jusqu'à une température située au-dessus de la température de saturation des sels en solution dans cet acide concentré, en ce que cet acide concentré et contenant des sels en solution est introduit sous brassage dans une suspension qui a été obtenue par poursuite du refroidissement de cet acide concentré et contenant des sels en solution, et dont la température est inférieure à 60 °C, de préférence entre 30 et 55 °C, et de laquelle la chaleur apportée par l'acide concentré est évacuée par refroidissement à l'aide d'eau de refroidissement, et en ce que la suspension de sulfates et d'hydrogénosulfates métalliques ainsi obtenue est utilisée directement pour la lixiviation de la matière première de titane, sans séparation des solides.

2. Procédé selon la revendication 1, caractérisé en ce que le temps de séjour moyen de la suspension est déterminé sur base de la différence ΔT entre la température de l'acide introduit dans la cuve de brassage et la température de la suspension contenue dans la cuve de brassage, de telle sorte que la durée de séjour moyen t (min) vaut 2 à 10 fois, de préférence 3 à 4 fois la valeur de ΔT (K).

3. Procédé selon l'une des revendications 1 ou 2, caractérisé en ce que la suspension est maintenue en circulation au moyen d'une pompe à travers un échangeur de chaleur extérieur inséré dans le circuit.

4. Procédé selon l'une ou plusieurs des revendications 1 à 3, caractérisé en ce que la différence entre les températures d'entrée et de sortie de la suspension mise en circulation à travers l'échangeur de chaleur est de 3 K au plus, de préférence 1-2 K.

5. Procédé selon l'une quelconque des revendications 1 à 4, caractérise en ce qu'un acide à une concentration de 60 à 70 % est utilisé comme agent de refroidissement dans la première étape de refroidissement, après avoir été préchauffé dans l'évaporateur avant introduction.

6. Procédé selon l'une quelconque des revendications 1 à 4, caractérisé en ce que le refroidissement s'effectue par évaporation d'eau sous vide.

7. Procédé selon l'une quelconque des revendications 1 à 6, caractérisé en ce que la concentration s'effectue au contact de fumées chaudes et en ce que les fumées à une température de 150 à 180° C sortant de l'évaporateur d'acide sont utilisées pour le préchauffage de l'acide à une concentration de 60 à 70 % jusqu'à une température de 100 à 140° C.

FIG. 1

FIG. 2

FIG. 3